# EUROPEAN PATENT SPECIFICATION

(11) **EP 2 199 368 B1**
(45) Date of publication and mention of the grant of the patent: **05.06.2013**
(21) Application number: 08833813.2
(22) Date of filing: 26.09.2008
(51) Int. Cl.: C10G 2/00, B01J 8/22

(54) **BUBBLE-COLUMN-TYPE HYDROCARBON SYNTHESIS REACTOR, AND HYDROCARBON SYNTHESIS REACTION SYSTEM HAVING THE REACTOR**
KOHLENWASSERSTOFFSYNTHESEREAKTOR VOM BLASENSÄULENTYP UND KOHLENWASSERSTOFFSYNTHESEREAKTIONSSYSTEM MIT DEM REAKTOR
RÉACTEUR DE SYNTHÈSE D'HYDROCARBURE DE TYPE À COLONNE À BULLES, ET SYSTÈME DE RÉACTION DE SYNTHÈSE D'HYDROCARBURE COMPORTANT UN TEL RÉACTEUR

(30) Priority: 27.09.2007 JP 2007252521
(43) Date of publication of application: 23.06.2010
(73) Proprietor: Nippon Steel & Sumikin Engineering Co., Ltd., Shinagawa-ku, Tokyo 141-8604 (JP); Japan Oil Gas and Metals National Corporation, Kawasaki-shi Kanagawa 212-8554 (JP); INPEX Corporation, Tokyo 107-6332 (JP); Nippon Oil Corporation, Tokyo 105-8412 (JP); Japan Petroleum Exploration Co. Ltd., Tokyo 100-0005 (JP); Cosmo Oil Co., Ltd., Tokyo 105-8528 (JP)
(72) Inventor: ONISHI, Yasuhiro c/o NIPPON STEEL ENGINEERING CO.LTD., Tokyo 1418604 (JP); KATO, Yuzuru, Tokyo 1418604 (JP); YAMADA, Eiichi, Tokyo 163-1036 (JP)
(74) Representative: Vossius & Partner
(86) International application number: PCT/JP2008/067469
(87) International publication number: WO 2009/041604

(56) References cited:
- JP-T- 2000 506 061
- JP-T- 2001 517 645
- JP-T- 2004 511 619
- US-A1- 2003 129 110
- US-B1- 6 822 006

## Description

### TECHNICAL FIELD

The present invention relates to a bubble column type hydrocarbon reactor for synthesizing a hydrocarbon compound by introducing a synthesis gas which is mainly composed of hydrogen and carbon monoxide into slurry having solid catalyst particles suspended in a liquid hydrocarbon, and relates to a hydrocarbon synthesis reaction system having the bubble column type hydrocarbon reactor.

### BACKGROUND ART OF THE INVENTION

As the reaction systems of a Fischer-Tropsch synthesis reaction (hereinafter called FT synthesis reaction) that generates a hydrocarbon compound and water by catalytic reaction from a synthesis gas which is mainly composed of hydrogen and carbon monoxide, a bubble column type Slurry phase FT synthesis reaction system that carries out an FT synthesis reaction by introducing a synthesis gas into a slurry in which solid catalyst particles are suspended in a liquid hydrocarbon is available (for example, refer to Patent Document 1 as mentioned below). Further, a hydrocarbon compound synthesized by the FT synthesis reaction is mainly utilized as a raw material for liquid fuel products such as naphtha (rough gasoline), kerosene and gas oil.

Conventionally, an FT synthesis reactor available for this bubble column type slurry bed FT synthesis reaction system includes a reactor main body which accommodates a slurry, and a gas-supplying section which introduces synthesis gas into the bottom of the reactor main body. Further, a cooling pipe (heat exchanger) which cools down the slurry heated by the reaction heat of the FT synthesis reaction is provided within the reactor main body. That is, by supplying refrigerant, such as water, into the cooling pipe, the slurry heated by the reaction heat is cooled down by heat exchange between the slurry and the water.
Patent Document 1: US Patent Application, First Publication No. 2006/0272986

### DETAILED DESCRIPTION OF THE INVENTION

### PROBLEMS TO BE SOLVED BY THE INVENTION

Meanwhile, in a case where some functions of the hydrocarbon synthesis reaction system have stopped or been degraded due to external factors, such as an electrical power failure, the supply flow rate of the synthesis gas into the slurry becomes unstable. Therefore, the synthesis mass balance and heat balance within the reactor main body based on the FT synthesis reaction may be disturbed, and the temperature inside the reactor main body may rise abruptly.
However, an unexpected abrupt temperature rise may be unable to be suppressed in the aforementioned conventional cooling pipe. At this time, any damage for a catalyst caused by heat becomes large. As a result, there is a problem that this damage leads to promotion of powdering of the catalyst, or reduction of the catalyst life. In this case, it is necessary to replace the catalyst more than a certain amount. If the replacement frequency of the catalyst increases, the cost of the operation or maintenance of the synthesis reaction system will become high.

The present invention has been made in view of such problems, and aims at alleviating or suppressing any damage for a catalyst at the time of stopping or degradation of some functions of the hydrocarbon synthesis reaction system, in a bubble column type hydrocarbon synthesis reactor which carries out an FT synthesis reaction, and the hydrocarbon synthesis reaction system including the same.

### MEANS FOR SOLVING THE PROBLEM

The bubble column type hydrocarbon synthesis reactor of the invention is a bubble column type hydrocarbon synthesis reactor which synthesizes a hydrocarbon compound by a chemical reaction of a synthesis gas including hydrogen and carbon monoxide as main components, and a slurry having solid catalyst particles suspended in a liquid. The hydrocarbon synthesis reactor includes a reactor main body which accommodates the slurry, a synthesis gas supplying section which supplies the synthesis gas to the slurry, and an introducing portion which introduces a cooling fluid having a lower temperature than the slurry into the reactor main body.

Further, a hydrocarbon synthesis reaction system of the invention includes the bubble column type hydrocarbon synthesis reactor, and a cooling fluid supplying means which supplies the cooling fluid into the reactor main body through the introducing portion.

According to the bubble column type hydrocarbon synthesis reactor and the hydrocarbon synthesis reaction system including the same, of the present invention, when supply of the synthesis gas to the slurry and flow of the slurry within the reactor main body stops or degrades, and thus becomes unstable, due to external factors, such as an electrical power failure, the above slurry can be directly cooled down by the cooling fluid by directly supplying the cooling fluid into the reactor main body by the cooling fluid supplying means.

In the bubble column type hydrocarbon synthesis reactor, the reactor main body is formed in a cylindrical shape, and the introducing portion includes an introducing opening which is opened to an inner peripheral surface of the reactor main body, and an introducing flow passage portion which leads the cooling fluid to the introducing opening such that the cooling fluid flows at least along a peripheral direction of the inner peripheral surface from the introducing opening.
Since the cooling fluid flows in the peripheral direction along the inner peripheral surface with low pressure loss inside the reactor main body, the cooling fluid can be efficiently diffused into the slurry. Accordingly, the cooling effect of the slurry by the cooling fluid can be further improved. That is it becomes possible to cool down the slurry more rapidly than the cooling rate of only the natural convection based on a temperature difference between the slurry and the cooling fluid.

Moreover, in the bubble column type hydrocarbon synthesis reactor, a plurality of introducing openings may be provided at arbitrary intervals in the peripheral direction of the inner peripheral surface, and the introducing flow passage portion may be provided so as not to offset the momentum of the flow of the cooling fluid supplied into the reactor main body from the certain introducing opening.
Further, in the bubble column type hydrocarbon synthesis reactor, a plurality of the introducing portions may be provided at arbitrary intervals in an axial direction of the reactor main body.

In these cases, it becomes possible to make the cooling fluid uniformly flow both in the peripheral direction and axial direction of the inner peripheral surface of the reactor main body. That is, since the cooling fluid can be easily diffused to the whole slurry within the reactor main body, the slurry can be cooled down more rapidly while any deviation for the temperature distribution within the slurry can be prevented.

Moreover, in the bubble column type hydrocarbon synthesis reactor, among the plurality of introducing portions, the direction of flow of the cooling fluid introduced into the reactor main body from one introducing portion may differ from the direction of flow of the cooling fluid introduced into the reactor main body from another introducing portion which is adjacent to the one introducing portion.
In this case, the slurry inside the reactor main body can be efficiently agitated by the flow of the cooling fluid described above, and it becomes possible to further enhance the cooling effect for the slurry.

Moreover, in the hydrocarbon synthesis reaction system, the cooling fluid supplying means may include a pressure vessel capable of holding the cooling fluid with higher pressure than the slurry accommodated in the reactor main body, and an opening/closing valve which is provided on a flow passage which leads to the inside of the reactor main body through the introducing portion from the pressure vessel, to allow opening and closing of the flow passage.

In this configuration, the opening/closing valve may be closed in advance, and the cooling fluid may be held inside the pressure vessel with higher pressure than the pressure inside the reactor main body. Also, in a case where some functions of the hydrocarbon synthesis reaction system have stopped or been degraded due to external factors, such as an electrical power failure, the cooling fluid within the pressure vessel can be made to flow into the reactor main body under a pressure difference between the inside of the pressure vessel and the inside of the reactor main body, only by keeping the opening/closing valve in an open state. That is, since an external power source which drives the cooling fluid becomes unnecessary, it also becomes possible to easily supply the cooling fluid in emergency, such as an electrical power failure.

Further, in the hydrocarbon synthesis reaction system, the cooling fluid supplying means may include a temperature regulator which controls the temperature of the cooling fluid to a higher temperature than the precipitation temperature of a wax fraction included in the hydrocarbon compound, and a lower temperature than the slurry accommodated in the reactor main body.
In this case, since the cooling fluid to be supplied into the reactor main body can be set to a predetermined temperature, it becomes possible to easily control the cooling temperature of the slurry within the reactor main body. Particularly by setting the temperature of the cooling fluid higher than the precipitation temperature of a wax fraction, the wax fraction can be easily prevented from precipitating when the slurry is cooled down.

Moreover, in the hydrocarbon synthesis reaction system, the cooling fluid may be the hydrocarbon compound extracted from the reactor main body.
In this case, the cooling fluid can be reliably prevented from negatively affecting the chemical reaction within the reactor main body. Further, since it is not necessary to prepare the cooling fluid separately, the running cost of the synthesis reaction system can be reduced.

### ADVANTAGEOUS EFFECTS OF THE INVENTION

According to the invention, in a case where some functions of the hydrocarbon synthesis reaction system have stopped or been degraded due to external factors, and thus the supply flow rate of the synthesis gas into the slurry becomes unstable, the slurry within the reactor main body can be directly cooled down by the cooling fluid. Therefore, any damage for a catalyst included in the slurry can be alleviated or suppressed. Accordingly, it is not necessary to increase the replacement frequency of the catalyst more than was previously required, and it becomes possible to suppress an increase in the maintenance cost of the bubble column type hydrocarbon synthesis reactor.

### BRIEF DESCRIPTION OF THE DRAWINGS

FIG. 1 is a schematic diagram showing the overall configuration of a liquid fuel synthesizing system according to an embodiment of the invention.
FIG. 2 is a longitudinal sectional view showing a reactor constituting the liquid fuel synthesizing system of FIG. 1.
FIG. 3 is a sectional view taken along a line A-A in FIG. 2.
FIG. 4 is a sectional view taken along a line B-B in FIG. 2.

### DESCRIPTION OF THE REFERENCE SYMBOLS

1: LIQUID FUEL SYNTHESIZING SYSTEM (HYDROCARBON SYNTHESIS REACTION SYSTEM)
30: BUBBLE COLUMN REACTOR (BUBBLE COLUMN TYPE HYDROCARBON SYNTHESIS REACTOR)
80: REACTOR MAIN BODY
80a: INNER PERIPHERAL SURFACE
82: SLURRY
84: DISTRIBUTOR (SYNTHESIS GAS SUPPLYING SECTION)
88, 89: INTRODUCING PORTION
88a, 89a: INTRODUCING OPENING
88b, 89b: INTRODUCING FLOW PASSAGE PORTION
90: COOLING FLUID SUPPLYING MEANS
92: TEMPERATURE REGULATOR
94: STORAGE TANK
95: SECOND OPENING/CLOSING VALVE
96: TRANSFER PUMP
98: PRESSURE VESSEL
99: FIRST OPENING/CLOSING VALVE
822: LIQUID HYDROCARBON (HYDROCARBON COMPOUND)
O: AXIS

### BEST MODE FOR CARRYING OUT THE INVENTION

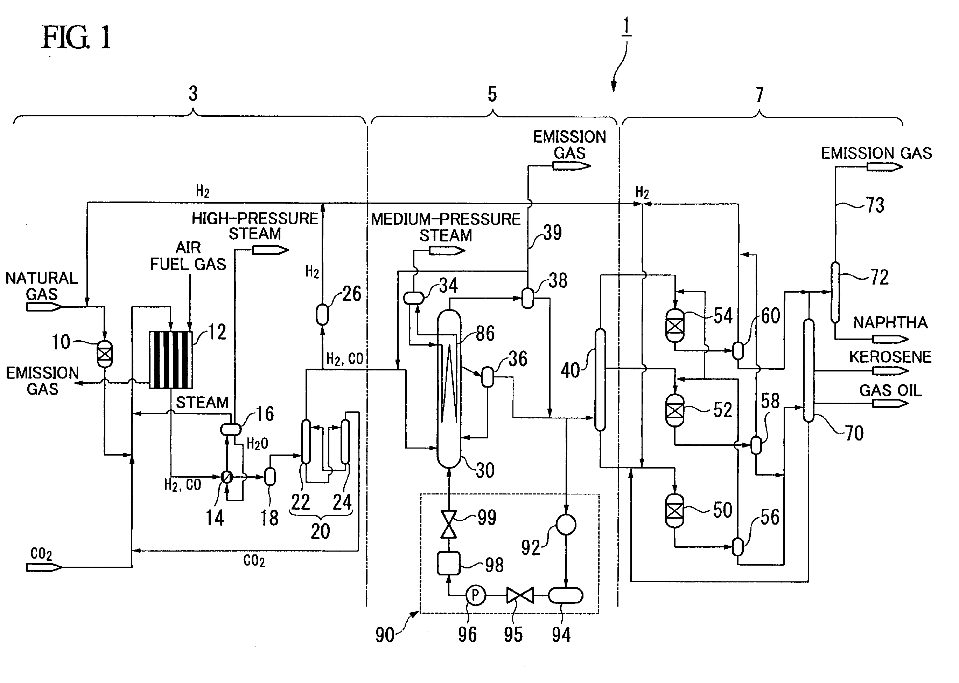

Hereinafter, preferred embodiments of the present invention will be described with reference to FIGS. 1 to 4.
As shown in FIG. 1, the liquid fuel synthesizing system (hydrocarbon synthesis reaction system) I according to the present embodiment is a plant facility which carries out the GTL process which converts a hydrocarbon raw material, such as natural gas, into liquid fuel. This liquid fuel synthesizing system 1 includes a synthesis gas production unit 3, an FT synthesis unit 5, and an upgrading unit 7. The synthesis gas production unit 3 reforms natural gas, which is a hydrocarbon raw material, to produce synthesis gas including carbon monoxide gas and hydrogen gas. The FT synthesis unit 5 produces liquid hydrocarbons from the produced synthesis gas by the Fischer-Tropsch synthesis reaction (hereafter referred to as "FT synthesis reaction"). The upgrading unit 7 hydrogenates and hydrocracks the liquid hydrocarbons produced by the FT synthesis reaction to manufacture liquid fuel products (naphtha, kerosene, gas oil, wax, etc.). Hereinafter, constituent parts of each of these units will be described.

The synthesis gas production unit 3 mainly includes, for example, a desulfurizing reactor 10, a reformer 12, a waste heat boiler 14, gas-liquid separators 16 and 18, a CO₂ removal unit 20, and a hydrogen separating apparatus 26. The desulfurizing reactor 10 is composed of a hydrogenation desulfurizer, etc., and removes a sulfur component from natural gas as a raw material. The reformer 12 reforms the natural gas supplied from the desulfurizing reactor 10, to produce synthesis gas including carbon monoxide gas (CO) and hydrogen gas (H₂) as main components. The waste heat boiler 14 recovers waste heat of the synthesis gas produced by the reformer 12, to manufacture high-pressure steam. The gas-liquid separator 16 separates the water heated by heat exchange with the synthesis gas in the waste heat boiler 14 into vapor (high-pressure steam) and liquid. The gas-liquid separator 18 removes condensate components from the synthesis gas cooled down in the waste heat boiler 14, and supplies a gas component to the CO₂ removal unit 20. The CO₂ removal unit 20 has an absorption column 22 which removes carbon dioxide gas by using an absorbent from the synthesis gas supplied from the gas-liquid separator 18, and a regeneration column 24 which diffuses and regenerates the carbon dioxide gas from the absorbent including the carbon dioxide gas. The hydrogen separating apparatus 26 separates a portion of the hydrogen gas included in the synthesis gas, the carbon dioxide gas of which has been separated by the CO₂ removal unit 20. It is to be noted herein that the above CO₂ removal unit 20 need not to be provided depending on circumstances.

Among them, the reformer 12 reforms natural gas by using carbon dioxide and steam to produce high-temperature synthesis gas including carbon monoxide gas and hydrogen gas as main components, by a steam and carbon-dioxide-gas reforming method expressed by the following chemical reaction formulas (1) and (2). In addition, the reforming method in this reformer 12 is not limited to the example of the above steam and carbon-dioxide-gas reforming method. For example, a steam reforming method, a partial oxidation method (POX) using oxygen, an autothermal reforming method (ATR) that is a combination of the partial oxidation method and the steam reforming method, a carbon-dioxide-gas reforming method, and the like can also be utilized.

CH₄+H₂O→CO+3H₂ (1)

CH₄ + CO₂ → ₂CO + 2H₂ (2)

Further, the hydrogen separating apparatus 26 is provided on a line branched from a main pipe which connects the CO₂ removal unit 20 or gas-liquid separator 18 with the bubble column reactor 30. This hydrogen separating apparatus 26 can be composed of, for example, a hydrogen PSA (Pressure Swing Adsorption) device which performs adsorption and desorption of hydrogen by using a pressure difference. This hydrogen PSA device has adsorbents (zeolitic adsorbent, activated carbon, alumina, silica gel, etc.) within a plurality of adsorption columns (not shown) which are arranged in parallel. By sequentially repeating processes including pressurizing, adsorption, desorption (pressure reduction), and purging of hydrogen in each of the adsorption columns, high-purity (for example, about 99.999%) hydrogen gas separated from the synthesis gas can be continuously supplied to a reactor.

In addition, the hydrogen gas separating method in the hydrogen separating apparatus 26 is not limited to the example of the pressure swing adsorption method as in the above hydrogen PSA device. For example, there may be a hydrogen storing alloy adsorption method, a membrane separation method, or a combination thereof.

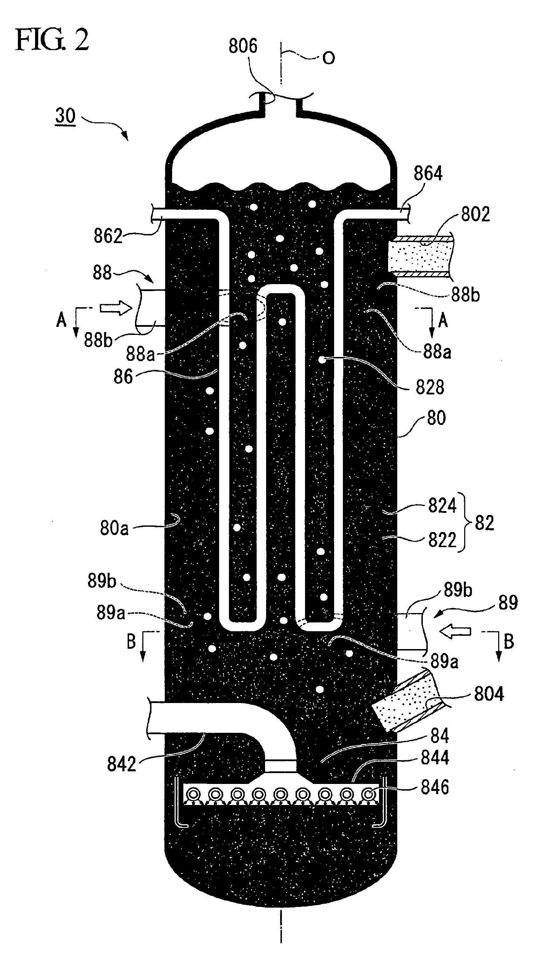

Next, the FT synthesis unit 5 will be described. The FT synthesis unit 5 mainly includes, for example, the bubble column reactor (bubble column type hydrocarbon synthesis reactor) 30, a gas-liquid separator 34, a separator 36, a gas-liquid separator 38, a first rectifying column 40, and a cooling fluid supplying means 90. The bubble column reactor 30, which is an example of a reactor which synthesizes synthesis gas into liquid hydrocarbons, functions as an FT synthesis reactor which synthesizes liquid hydrocarbons from synthesis gas by the FT synthesis reaction. The bubble column reactor 30, as shown in FIG. 2, mainly includes a reactor main body 80, a distributor 84 and a cooling pipe 86.

The reactor main body 80 is a substantially cylindrical vessel made of metal, the diameter of which is about 1 to 20 meters, preferably about 2 to 10 meters. The height of the reactor main body 80 is about 10 to 50 meters, preferably about 15 to 45 meters. Slurry 82 having solid catalyst particles 824 suspended in liquid hydrocarbons (product of the FT synthesis reaction) 822 is accommodated inside the reactor main body 80. The reactor main body 80 is formed with a slurry outflow port 802 through which a portion of the slurry 82 is allowed to flow out to the separator 36 from an upper portion of the reactor main body, and a slurry inflow port 804 through which the slurry 82 including a number of catalyst particles 824 is allowed to flow into a lower portion of the reactor main body 80 from the separator 36, and an unreacted gas outlet 806 which supplies unreacted synthesis gas, etc. to the gas-liquid separator 38 from the top of the reactor main body 80.

The distributor 84, which is an example of a synthesis gas supplying section according to the present embodiment, is disposed at the lower portion inside the reactor main body 80 to supply synthesis gas including hydrogen and carbon monoxide as main components into the slurry 82. The distributor 84 is composed of a synthesis gas supply pipe 842, a nozzle header 844 attached to a distal end of the synthesis gas supply pipe 842, and a plurality of synthesis gas supply nozzles 846 provided at a side portion of the nozzle header 844.

The synthesis gas supplied through the synthesis gas supply pipe 842 from the outside passes through the nozzle header 844 and is injected into the slurry 82 inside the reactor main body 80 from a synthesis gas supply port (not shown) provided at a lower portion of each of synthesis gas supply nozzles 846 (at the bottom of the reactor main body 80). In addition, in the present embodiment, although the synthesis gas is injected toward the lower portion (direction shown by the thin arrows in the drawing) of the reactor main body 80, the synthesis gas may be injected toward the upper portion of the reactor main body 80.
Thus, the synthesis gas introduced into the slurry 82 from the distributor 84 is made into bubbles 828, and flows through the slurry 82 from the bottom toward the top in the height direction (the perpendicular direction) of the reactor main body 80. In the process, the synthesis gas is dissolved in the liquid hydrocarbons 822 and brought into contact with the catalyst particles 824, whereby a synthesis reaction of the liquid hydrocarbons (FT synthesis reaction) is carried out. Specifically, as shown in the following chemical reaction formula (3), the hydrogen gas and the carbon monoxide gas cause a synthesis reaction.

2nH₂ + nCO → (-CH₂-)n + nH₂O (3)

n is positive number,

Further, the synthesis gas is introduced into the slurry 82 from the distributor 84 disposed at the lower portion inside the reactor main body 80. The synthesis gas introduced into the slurry is made into bubbles 828 and ascends through the reactor main body 80. Thereby, inside the reactor main body 80, an upward flow (air lift) of the slurry 82 is generated at the center portion inside the reactor main body 80 and in the vicinity thereof (that is, in the vicinity of the center axis of the reactor main body 80), and a downward flow of the slurry 82 is generated in the vicinity of the inner wall of the reactor main body 80 (that is, in the vicinity of the inner peripheral portion). Thereby, as shown by the thick arrows in FIG. 2, a circulating flow of the slurry 82 is generated inside the reactor main body 80.

The cooling pipe 86 is provided along the height direction of the reactor main body 80 inside the reactor main body 80 to cool down the slurry 82 whose temperature has risen due to the heat generated by the FT synthesis reaction. The cooling pipe 86 may be formed so as to reciprocate a plurality of times (for example, to reciprocate two times in FIG. 2) vertically in the perpendicular direction, for example, by bending a single pipe as shown in FIG. 2. However, the shape and number of cooling pipes are not limited to the above shape and number, but may be such that the cooling pipes are evenly arranged inside the reactor main body 80 and contribute to uniform cooling of the slurry 82. For example, a plurality of cooling pipes having a double-pipe structure called a bayonet type may be arranged inside the reactor main body 80.

Cooling water (for example, the temperature of which is different by about -50 to 0°C from the interior temperature of the reactor main body 80) introduced from the cooling pipe inlet 862 is caused to circulate through the cooling pipe 86. As the cooling water exchanges heat with the slurry 82 via the wall of the cooling pipe 86 in the process during which the cooling water circulates through the cooling pipe 86, the slurry 82 inside the reactor main body 80 is cooled down. A portion of the cooling water, as shown in FIG. 1, can be discharged to the gas-liquid separator 34 from the cooling pipe outlet 864 as steam, and recovered as medium-pressure steam. In addition, the medium for cooling the slurry 82 is not limited to the cooling water as described above. For example, a straight chain and branched-chain paraffin, naphthenic hydrocarbon, olefin, low-molecular-weight silane, silyl ether, and silicone oil, etc., of C₄ to C₁₀ may be used as the medium.

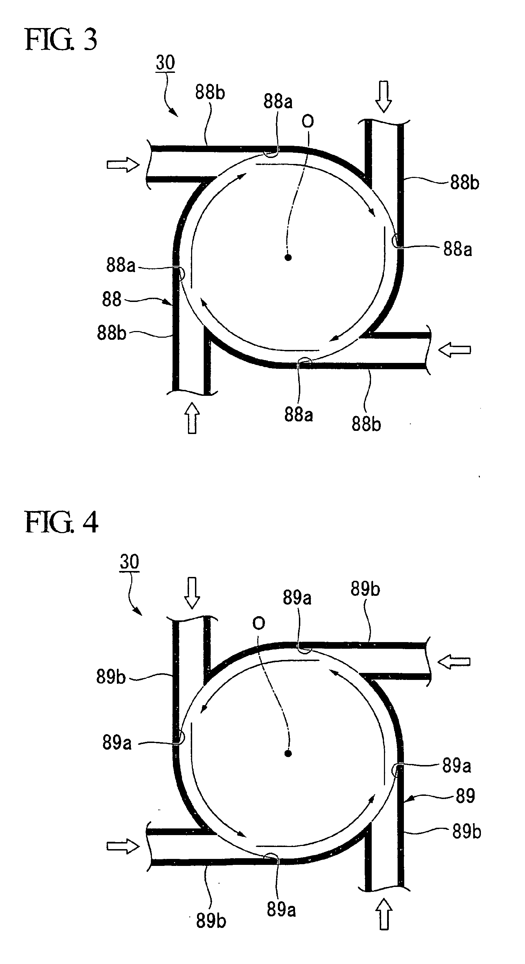

Further, as shown in FIGS. 2 to 4, upper and lower portions of the reactor main body 80 are provided with two introducing portions 88 and 89 which introduce a low-temperature cooling fluid rather than the slurry 82 into the reactor main body 80. That is, the two introducing portions 88 and 89 are provided at arbitrary interval in the direction of axis O of the reactor main body 80.
The upper introducing portion 88 of the reactor main body 80, as shown in FIGS. 2 and 3, includes a plurality of (four in the example shown) introducing openings 88a which are opened to an inner peripheral surface 80a of the reactor main body 80, and introducing flow passage portions 88b connected to the introducing openings 88a, respectively.

The plurality of introducing openings 88a are arranged in the same plane orthogonal to the axis O of the reactor main body 80, and are provided at equal intervals in the peripheral direction of the inner peripheral surface 80a. Further, the introducing flow passage portions 88b form a pipe which leads the cooling fluid to the introducing openings 88a such that the cooling fluid flows along the peripheral direction of the inner peripheral surface 80a from the introducing openings 88a, respectively. Also, the introducing flow passage portions 88b which constitute each introducing portion 88 are provided such that the cooling fluid supplied into the reactor main body 80 from the plurality of introducing openings 88a flows in the same direction along the inner peripheral surface 80a. Specifically, the introducing flow passage portions 88b are provided such that the cooling fluid flows clockwise along the inner peripheral surface 80a from the introducing openings 88a, respectively, as seen from the upper portion of the reactor main body 80. Thereby, the momentums of the cooling fluids supplied from the plurality of introducing openings 88a into the reactor main body 80 do not cancel each other.

On the other hand, the lower introducing portion 89 of the reactor main body 80 also has almost the same configuration as the upper introducing portion 88. That is, the lower introducing portion 89 also includes a plurality of (four in the example shown) introducing openings 89a which are opened to the inner peripheral surface 80a of the reactor main body 80, and introducing flow passage portions 89b connected to the introducing openings 89a, respectively. Also, the plurality of introducing openings 89a are arranged in the same plane orthogonal to the axis O, and are provided at equal intervals in the peripheral direction of the inner peripheral surface 80a. Also, the introducing flow passage portions 89b which form the lower introducing portion 89, similarly to the upper introducing portion 88, are provided such that the cooling fluid supplied into the reactor main body 80 from the plurality of introducing openings 89a flows in the same direction along the inner peripheral surface 80a, and the momentums of the cooling fluids supplied from the plurality of introducing openings 88a and 89a into the reactor main body 80 do not cancel each other.
It is to be noted herein that the introducing flow passage portions 89b which form the lower introducing portion 89 are provided such that the cooling fluid flows counterclockwise along the inner peripheral surface 80a from the introducing openings 89a, respectively, as seen from the upper portion of the reactor main body 80. That is, inflow directions of the cooling fluid in the peripheral direction are opposite to each other in the upper portion and lower portion of the reactor main body 80.

As shown in FIGS. 1 and 2, the gas-liquid separator 34 separates the water circulated and heated through the cooling pipe 86 disposed in the bubble column reactor 30 into steam (medium-pressure steam) and liquid. The separator 36 is connected to the slurry outflow port 802 of the bubble column reactor 30, to separate the liquid hydrocarbons 822 from the slurry 82 including catalyst particle 824. Further, the separator 36 is also connected to the slurry inflow port 804 of the bubble column reactor 30, and the slurry 82 including a number of catalyst particles 824 flows into the bubble column reactor 30 from the separator 36. The gas-liquid separator 38 is connected to the unreacted gas outlet 806 of the bubble column reactor 30 to cool down unreacted synthesis gas and gaseous hydrocarbons. The first rectifying column 40 distills the liquid hydrocarbons supplied via the separator 36 and the gas-liquid separator 38 from the bubble column reactor 30, and separates and refines the liquid hydrocarbons into individual product fractions according to boiling points.

The cooling fluid supplying means 90 supplies the cooling fluid through the aforementioned introducing portions 88 and 89 into the reactor main body 80 of the bubble column reactor 30, and mainly includes a temperature regulator 92, a storage tank 94, a transfer pump 96, and a pressure vessel 98.
The temperature regulator 92 is provided on a branch line branched from a main line which connects the gas-liquid separator 38 and the first rectifying column 40. The temperature regulator 92 heats or cools liquid including the liquid hydrocarbons 822 extracted from the bubble column reactor 30 and separated from the slurry 82 in the separator 36, and this liquid is used as the cooling fluid to be supplied into the reactor main body 80 of the bubble column reactor 30. Also, the temperature regulator 92 is adapted to be able to control the temperature of cooling fluid to a lower than that of the slurry 82 within the reactor main body 80, and a higher than the precipitation temperature of a wax fraction included in the liquid hydrocarbons 822. This can prevent precipitation of a wax fraction included in the slurry 82 within the cooling fluid itself or the reactor main body 80 cooled down by the cooling fluid.

The storage tank 94 is connected to the above temperature regulator 92, and is adapted to be able to store a large amount of cooling fluid introduced from the temperature regulator 92. The pressure vessel 98 is connected to the storage tank 94 and the reactor main body 80, and is configured to be able to hold the cooling fluid with higher pressure than the pressure of the slurry 82 within the reactor main body 80. In addition, in the present embodiment, a flow passage for the cooling fluid which leads to the reactor main body 80 from the pressure vessel 98 is branched, and the branched flow passages are connected to the introducing flow passage portions 88b and 89b, respectively, of the reactor main body 80 shown in FIGS. 2 to 4.
The transfer pump 96 is provided between the storage tank 94 and the pressure vessel 98 to forcibly transfer the cooling fluid to the pressure vessel 98 from the storage tank 94. In a flow passage which leads to the reactor main body 80 through the introducing portions 88 and 89 from the pressure vessel 98, a first opening/closing valve 99 which allows this flow passage to be opened and closed is provided. Accordingly, with the first opening/closing valve 99 closed, the pressure of the cooling fluid in the pressure vessel 98 rises as the cooling fluid is transferred to the pressure vessel 98 by the transfer pump 96.

Further, in a flow passage which leads to the transfer pump 96 from the storage tank 94, a second opening/closing valve 95 which allows this flow passage to be opened and closed is provided. Accordingly, by closing the second opening/closing valve 95 after the cooling fluid is transferred to the pressure vessel 98 as mentioned above, even if the transfer pump 96 is stopped, the pressure of the cooling fluid in the pressure vessel 98 can be prevented from falling, and the cooling fluid is held in the pressure vessel 98 in the high pressure state. By opening the first opening/closing valve 99 in this holding state, the cooling fluid can be supplied into the reactor main body 80 depending on a pressure difference between the inside of the pressure vessel 98 and the inside of the reactor main body 80.

Finally, the upgrading unit 7 will be described. The upgrading unit 7 includes, for example, a WAX component hydrocracking reactor 50, a kerosene and gas oil fraction hydrotreating reactor 52, a naphtha fraction hydrotreating reactor 54, gas-liquid separators 56, 58 and 60, a second rectifying column 70, and a naphtha stabilizer 72. The WAX component hydrocracking reactor 50 is connected to a lower portion of the first rectifying column 40. The kerosene and gas oil fraction hydrotreating reactor 52 is connected to a central portion of the first rectifying column 40. The naphtha fraction hydrotreating reactor 54 is connected to an upper portion of the first rectifying column 40. The gas-liquid separators 56, 58 and 60 are provided so as to correspond to the hydrogenation reactors 50, 52 and 54, respectively. The second rectifying column 70 separates and refines the liquid hydrocarbons supplied from the gas-liquid separators 56 and 58 according to boiling points. The naphtha stabilizer 72 rectifies liquid hydrocarbons of a naphtha fraction supplied from the gas-liquid separator 60 and the second rectifying column 70. Then, the naphtha stabilizer 72 discharges components lighter than butane toward flare gas (emission gas), and separates and recovers components having a carbon number of five or more as a naphtha product.

Next, a process (GTL process) of synthesizing liquid fuel from natural gas by the liquid fuel synthesizing system 1 configured as above will be described.

Natural gas (whose main component is CH₄) as a hydrocarbon raw material is supplied to the liquid fuel synthesizing system 1 from an external natural gas supply source (not shown), such as a natural gas field or a natural gas plant. The above synthesis gas production unit 3 reforms this natural gas to manufacture synthesis gas (mixed gas including carbon monoxide gas and hydrogen gas as main components).

Specifically, first, the above natural gas is supplied to the desulfurizing reactor 10 along with the hydrogen gas separated by the hydrogen separating apparatus 26. The desulfurizing reactor 10 hydrogenates and desulfurizes a sulfur component included in the natural gas using the hydrogen gas, with a ZnO catalyst. By desulfurizing natural gas in advance in this way, it is possible to prevent a decrease in activity of a catalyst used in the reformer 12, the bubble column reactor 30, etc. because of sulfur.

The natural gas (may also contain carbon dioxide) desulfurized in this way is supplied to the reformer 12 after the carbon dioxide (CO₂) gas supplied from a carbon-dioxide supply source (not shown) and the steam generated in the waste heat boiler 14 are mixed with the desulfurized natural gas. The reformer 12 reforms natural gas by using carbon dioxide and steam to produce high-temperature synthesis gas including carbon monoxide gas and hydrogen gas as main components, by the above steam and carbon-dioxide-gas reforming method. At this time, the reformer 12 is supplied with, for example, fuel gas for a burner disposed in the reformer 12 and air, and reaction heat required for the above steam and CO₂ reforming reaction, which is an endothermic reaction, is provided by the heat of combustion of the fuel gas in the burner and radiant heat in a furnace of the reformer 12.

The high-temperature synthesis gas (for example, 900°C. 2.0 MPaG) produced in the reformer 12 in this way is supplied to the waste heat boiler 14, and is cooled down by the heat exchange with the water which circulates through the waste heat boiler 14 (for example, 400°C), thereby exhausting and recovering heat. At this time, the water heated by the synthesis gas in the waste heat boiler 14 is supplied to the gas-liquid separator 16. From this gas-liquid separator 16, a gas component is supplied to the reformer 12 or other external devices as high-pressure steam (for example, 3.4 to 10.0 MPaG), and water as a liquid component is returned to the waste heat boiler 14.

Meanwhile, the synthesis gas cooled down in the waste heat boiler 14 is supplied to the absorption column 22 of the CO₂ removal unit 20, or the bubble column reactor 30, after condensate components are separated and removed from the synthesis gas in the gas-liquid separator 18. The absorption column 22 absorbs carbon dioxide gas included in the synthesis gas into the circulated absorbent, to separate the carbon dioxide gas from the synthesis gas. The absorbent including the carbon dioxide gas within this absorption column 22 is introduced into the regeneration column 24, the absorbent including the carbon dioxide gas is heated and subjected to stripping treatment with, for example, steam, and the resulting diffused carbon dioxide gas is delivered to the reformer 12 from the regeneration column 24, and is reused for the above reforming reaction.

The synthesis gas produced in the synthesis gas production unit 3 in this way is supplied to the bubble column reactor 30 of the above FT synthesis unit 5. At this time, the composition ratio of the synthesis gas supplied to the bubble column reactor 30 is adjusted to a composition ratio (for example, H₂: CO = 2:1 (molar ratio)) suitable for the FT synthesis reaction. In addition, the pressure of the synthesis gas supplied to the bubble column reactor 30 is raised to be suitable (for example, 3.6 MPaG) for the FT synthesis reaction by a compressor (not shown) provided in a pipe which connects the CO₂ removal unit 20 with the bubble column reactor 30. Note that, the compressor may be removed from the pipe.

Further, a portion of the synthesis gas, the carbon dioxide gas of which has been separated by the above CO₂ removal unit 20, is also supplied to the hydrogen separating apparatus 26. The hydrogen separating apparatus 26 separates the hydrogen gas included in the synthesis gas, by the adsorption and desorption (hydrogen PSA) utilizing a pressure difference as described above. This separated hydrogen is continuously supplied from a gas holder (not shown), etc. via a compressor (not shown) to various hydrogen-utilizing reaction devices (for example, the desulfurizing reactor 10, the WAX component hydrocracking reactor 50, the kerosene and gas oil fraction hydrotreating reactor 52, the naphtha fraction hydrotreating reactor 54, etc.) which perform predetermined reactions utilizing hydrogen within the liquid fuel synthesizing system 1.

Next, the above FT synthesis unit 5 produces liquid hydrocarbons by the FT synthesis reaction from the synthesis gas produced by the above synthesis gas production unit 3.

Specifically, the synthesis gas produced by the above synthesis gas production unit 3 flows into the reactor main body 80 of the bubble column reactor 30 from the bottom of the body 80, and flows up through the slurry 82 reserved in the reactor main body 80. At this time, within the reactor main body 80, the carbon monoxide and hydrogen gas which are included in the synthesis gas react with each other by the FT synthesis reaction, thereby producing hydrocarbons. Moreover, by circulating water through the cooling pipe 86 in the bubble column reactor 30 at the time of this synthesis reaction, the heat of the FT synthesis reaction is removed, and the water heated by this heat exchange is vaporized into steam. As for this water vapor, the water separated in the gas-liquid separator 34 is returned to the cooling pipe 86, and the gas component is supplied to an external device as medium-pressure steam (for example, 1.0 to 2.5 MPaG).

The liquid hydrocarbons 822 synthesized in the bubble column reactor 30 in this way are extracted as the slurry 82 from the middle portion of the bubble column reactor 30, and are introduced into the separator 36. The separator 36 separates the extracted slurry 82 into a solid component, such as the catalyst particles 824, and a liquid component including the liquid hydrocarbons 822. A portion of the separated solid component of the slurry, such as the catalyst particles 824, is returned to the bubble column reactor 30, and a liquid component is supplied to the first rectifying column 40. From the unreacted gas outlet 806 of the bubble column reactor 30, unreacted synthesis gas, and a gas component of the synthesized hydrocarbons are introduced into the gas-liquid separator 38. The gas-liquid separator 38 cools down these gases to separate some condensed liquid hydrocarbons to introduce them into the first rectifying column 40. Meanwhile, as for the gas component separated in the gas-liquid separator 38, unreacted synthesis gases (CO and H₂) are returned to the bottom of the bubble column reactor 30, and are reused for the FT synthesis reaction. Further, the emission gas (flare gas) other than target products, including as a main component hydrocarbon gas having a small carbon number (less than C₄), is introduced into an external combustion facility (not shown), is combusted therein, and is then emitted to the atmosphere.

Next, the first rectifying column 40 heats the liquid hydrocarbons (whose carbon numbers are various) supplied via the separator 36 and the gas-liquid separator 38 from the bubble column reactor 30 as described above, to fractionally distill the liquid hydrogens using a difference in boiling point. Thereby, the first rectifying column 40 separates and refines the liquid hydrogens into a naphtha fraction (whose boiling point is less than about 150°C), a kerosene and gas oil fraction (whose boiling point is about 150 to 350°C), and a WAX component (whose boiling point is greater than about 350°C). The liquid hydrocarbons (mainly C₂₁ or more) as the WAX component extracted from the bottom of the first rectifying column 40 are transferred to the WAX component hydrocracking reactor 50, the liquid hydrocarbons (mainly C₁₁ to C₂₀) as the kerosene and gas oil fraction removed from the middle portion of the first rectifying column 40 are transferred to the kerosene and gas oil fraction hydrotreating reactor 52, and the liquid hydrocarbons (mainly C₅ to C₁₀) as the naphtha fraction extracted from the upper portion of the first rectifying column 40 are transferred to the naphtha fraction hydrotreating reactor 54.

The WAX component hydrocracking reactor 50 hydrocracks the liquid hydrocarbons as the WAX component with a large carbon number (approximately C₂₁ or more), which has been supplied from the lower portion of the first rectifying column 40, by using the hydrogen gas supplied from the above hydrogen separating apparatus 26, to reduce the carbon number to less than C₂₀. In this hydrocracking reaction, hydrocarbons with a large carbon number and with low molecular weight are generated by cleaving C-C bonds of hydrocarbons with a large carbon number, using a catalyst and heat. A product including the liquid hydrocarbons hydrocracked by this WAX component hydrocracking reactor 50 is separated into gas and liquid in the gas-liquid separator 56, the liquid hydrocarbons of which are transferred to the second rectifying column 70, and the gas component (including hydrogen gas) of which is transferred to the kerosene and gas oil fraction hydrotreating reactor 52 and the naphtha fraction hydrotreating reactor 54.

The kerosene and gas oil fraction hydrotreating reactor 52 hydrotreats liquid hydrocarbons (approximately C₁₁ to C₂₀) as the kerosene and gas oil fractions having an approximately middle carbon number, which have been supplied from the central portion of the first rectifying column 40, by using the hydrogen gas supplied via the WAX component hydrocracking reactor 50 from the hydrogen separating apparatus 26. This hydrotreating reaction is a reaction which adds hydrogen to isomerized and unsaturated bonds of the above liquid hydrocarbons, to saturate the liquid hydrocarbons and to mainly generate side-chain saturated hydrocarbons. As a result, a product including the hydrotreated liquid hydrocarbons is separated into gas and liquid in the gas-liquid separator 58, the liquid hydrocarbons of which are transferred to the second rectifying column 70, and the gas component (including hydrogen gas) of which is reused for the above hydrogenation reaction.

The naphtha fraction hydrotreating reactor 54 hydrotreats liquid hydrocarbons (approximately C₁₀ or less) as the naphtha fraction with a low carbon number, which have been supplied from the upper portion of the first rectifying column 40, by using the hydrogen gas supplied via the WAX component hydrocracking reactor 50 from the hydrogen separating apparatus 26. As a result, a product including the hydrotreated liquid hydrocarbons is separated into gas and liquid in the gas-liquid separator 60, the liquid hydrocarbons of which are transferred to the naphtha stabilizer 72, and the gas component (including hydrogen gas) of which is reused for the above hydrogenation reaction.

Next, the second rectifying column 70 distills the liquid hydrocarbons supplied from the WAX component hydrocracking reactor 50 and the kerosene and gas oil fraction hydrotreating reactor 52 as described above. Thereby, the second rectifying column 70 separates and refines the liquid hydrogen into a naphtha fraction (whose boiling point is less than about 150°C) with a carbon number of 10 or less, kerosene (whose boiling point is about 150 to 250°C), gas oil (whose boiling point is about 250 to 350°C), and undegraded WAX component (whose boiling point is about 350°C) from the WAX component hydrocracking reactor 50. The gas oil is extracted from a lower portion of the second rectifying column 70, and the kerosene is extracted from a middle portion thereof. Meanwhile, a hydrocarbon gas with a carbon number of 10 or more is extracted from the top of the second rectifying column 70, and is supplied to the naphtha stabilizer 72.

Moreover, the naphtha stabilizer 72 distills the hydrocarbons with a carbon number of 10 or less, which have been supplied from the above naphtha fraction hydrotreating reactor 54 and second rectifying column 70. Thereby, the naphtha stabilizer 72 separates and refines naphtha (C₅ to C₁₀) as a product. Accordingly, high-purity naphtha is extracted from a lower portion of the naphtha stabilizer 72. Meanwhile, the emission gas (flare gas) other than products, which contains as a main component hydrocarbons with a carbon number lower than or equal to a predetermined number or less (lower than or equal to C₄), is discharged from the top of the naphtha stabilizer 72. Further, the emission gas is introduced into an external combustion facility (not shown) via a second cooling device 82 (details thereof will be described later), is combusted therein, and is then discharged to the atmosphere.

The process (GTL process) of the liquid fuel synthesizing system 1 has been described hitherto. Meanwhile, when the above-described GTL process stops or degrades like in the case where some functions of the liquid fuel synthesizing system 1 stop or degrade due to external factors, such as an electrical power failure, that is, when supply of the synthesis gas within the reactor main body 80 to the slurry 82 and convection of the slurry 82 within the reactor main body 80 stop or degrade, and thus become unstable, the temperature of the slurry 82 within the reactor main body 80 may rise abruptly. Thus, during the stopping of the GTL process, the slurry 82 is cooled down by the cooling fluid supplying means 90. Hereinafter, a cooling method of the slurry 82 within the reactor main body 80 by the cooling fluid supplying means 90 will be described.

In this cooling method, while the GTL process is carried out, liquid hydrocarbons as the cooling fluid are held in advance within a pressure vessel with high pressure. Specifically, the first opening/closing valve 99 of the cooling fluid supplying means 90 is closed, and some of the liquid hydrocarbons extracted from the separator 36 or the gas-liquid separator 38 are supplied to the temperature regulator 92. At this time, the temperature of liquid hydrocarbons supplied to the temperature regulator 92 is controlled lower than that of the slurry 82 within the reactor main body 80, which causes the FT synthesis reaction, and higher than the precipitation temperature of a wax fraction included in the liquid hydrocarbons. Also, the liquid hydrocarbons whose temperature has been regulated are introduced into the storage tank 94 from the temperature regulator 92.

Moreover, while the GTL process is carried out, with the second opening/closing valve 95 opened, the liquid hydrocarbons are transferred into the pressure vessel 98 from the inside of the storage tank 94 by the transfer pump 96, and the pressure of the liquid hydrocarbons within the pressure vessel 98 is raised. In addition, when the pressure of the liquid hydrocarbons within the pressure vessel 98 has reached a predetermined pressure, it is desirable that the transfer pump 96 be stopped and the second opening/closing valve 95 be closed.
Thereby, the pressure of the liquid hydrocarbons within the pressure vessel 98 will be held at a predetermined pressure. In addition, it is desirable that the aforementioned predetermined pressure mentioned above be at least a pressure such that the liquid hydrocarbons can flow into the reactor main body 80, and be spread into the slurry 82 of the reactor main body 80.

Also, when the GTL process has stopped and supply of the synthesis gas to the slurry 82 within the reactor main body 80 or the convection of the slurry 82 within the reactor main body 80 has stopped, the first opening/closing valve 99 of the cooling fluid supplying means 90 is kept in an open state. Thereby, under a pressure difference between the inside of the pressure vessel 98 and the inside of the reactor main body 80, the liquid hydrocarbons within the pressure vessel 98 can flow into the reactor main body 80 through the introducing portions 88 and 89, respectively, thereby directly cooling down the slurry 82 within the reactor main body 80 by the liquid hydrocarbons. In addition, since the temperature of the liquid hydrocarbons which form the cooling fluid are set to lower than that of the slurry 82 within the reactor main body 80, and higher than the precipitation temperature of a wax fraction included in the liquid hydrocarbons, 822 within the reactor main body 80, even while the liquid hydrocarbons cool down the slurry 82, the wax fraction can be prevented from precipitating within the reactor main body 80.

According to the liquid fuel synthesizing system 1 and the bubble column reactor 30 having the same according to the present embodiment, even if the GTL process stops, the slurry 82 within the reactor main body 80 can be directly cooled down by the cooling fluid. Therefore, any damage to the catalyst particles 824 included in the slurry 82 can be alleviated or suppressed. Accordingly, it is not necessary to increase the replacement frequency of the catalyst particles 824 more than was previously required, and it becomes possible to suppress an increase in the maintenance cost of the bubble column reactor 30.

Further, the cooling fluid which has flowed into the reactor main body 80 flows in the peripheral direction along the inner peripheral surface 80a with low pressure loss, as shown in FIGS. 3 and 4. Moreover, since the cooling fluid flows in directions opposite to each other in the upper portion and lower portion within the reactor main body 80, the slurry 82 within the reactor main body 80 can be agitated efficiently. Accordingly, the cooling fluid can be efficiently diffused to the whole slurry 82 within the reactor main body 80, and the cooling effect of the slurry 82 by the cooling fluid can be enhanced while any deviation can be prevented from occurring in the temperature distribution of the slurry 82. That is, it becomes possible to cool down the slurry more rapidly than the cooling rate of only the natural convection based on a temperature difference between the cooling fluid and the slurry 82.

Moreover, according to the liquid fuel synthesizing system 1 of the present embodiment, since the cooling fluid can flow into the reactor main body 80 only by opening the first opening/closing valve 99 at the time of shutdown, an external power source which drives the cooling fluid, such as a pump, becomes unnecessary, and the cooling fluid can be supplied easily.
Further, since the cooling fluid to be supplied into the reactor main body 80 can be set to a predetermined temperature by providing the cooling fluid supplying means 90 with the temperature regulator 92, it becomes possible to easily control the cooling temperature of the slurry within the reactor main body 80. Particularly by setting the temperature of the cooling fluid higher than the precipitation temperature of a wax fraction, the wax fraction can be easily prevented from precipitating when the slurry 82 is cooled down. Moreover, since the cooling fluid of the slurry 82 includes liquid hydrocarbons extracted from the reactor main body 80, any influence on the FT synthesis reaction caused within the reactor main body 80 can be prevented positively. Further, since it is also not necessary to prepare the cooling fluid separately, the running cost of the liquid fuel synthesizing system 1 can be reduced.

In addition, in the above embodiment, the introducing flow passage portions 88b and 89b which constitute the introducing portions 88 and 89, respectively, are provided such that the cooling fluid flows in the peripheral direction along the inner peripheral surface 80a of the reactor main body 80. However, the introducing flow passage portions just have to be provided so as to flow in the peripheral direction. That is, for example, the introducing flow passage portions 88b and 89b may be provided such that the cooling fluid flows in directions including both a peripheral component and an axial component along the inner peripheral surface 80a, that is, such that a swirling flow is produced in the reactor main body 80.
Further, although the two introducing portions 88 and 89 are configured so as to introduce the cooling fluid in directions opposite to each other, they just have to be configured so as to introduce the cooling fluid in directions different from each other.

Moreover, although the two introducing portions 88 and 89 are provided at an arbitrary interval in the upper portion and lower portion of the reactor main body 80, three or more introducing portions may be provided at intervals in the axial direction, or may be provided only in one place in the axial direction. In addition, in the case where three or more introducing portions are provided, all the introducing portions may be configured so as to introduce the cooling fluid in directions different from one another, or only the introducing portions which are adjacent to each other in the axial direction may be configured so as to introduce the cooling fluid in directions different from one another.
Further, a plurality of introducing flow passage portions 88a and 89a which constitute the introducing portions 88 and 89, respectively, just have to be disposed at intervals in the peripheral direction of the inner peripheral surface 80a, or may be arranged equally in the peripheral direction. Moreover, although a plurality of introducing openings 88a and 89a which constitute the introducing portions 88 and 89, respectively, are arranged in the same plane orthogonal to the axial direction, they just have to be arranged in the same plane which intersects the axial direction.

Further, although the introducing portions 88 and 89 include a plurality of introducing openings 88a and 89a, they may include, for example, only one introducing opening.
Moreover, although the invention is not limited to the structure in which the introducing portions 88 and 89 include the introducing openings 88a and 89a and the introducing flow passage portions 88b and 89b, the introducing portions just have to introduce the cooling fluid into the reactor main body 80. Accordingly, a structure in which the introducing portions directly introduce the cooling fluid into a radial central portion of the reactor main body 80 may be adopted, for example, similarly to the distributor 84 of the above embodiment.

Further, the cooling fluid is not limited to liquid including the liquid hydrocarbons 822 separated in the separator 36. For example, the cooling liquid may be individual product fractions of liquid hydrocarbons which are separated and refined in the first rectifying column 40, or may be products including liquid hydrocarbons which are hydrocracked and hydrotreated in the hydrogenation reactors 50, 52, and 54, liquid hydrocarbons separated in the gas-liquid separators 56, 58, and 60, and liquid fuel products, such as kerosene and gas oil, which are refined in the second rectifying column 70.
Moreover, the cooling fluid is not limited to one which is refined in the liquid fuel synthesizing system 1, but just has to be gas or liquid which does not affect the FT synthesis reaction. In addition, the gas which does not affect the FT synthesis reaction includes, for example, an inert gas, such as nitrogen or argon.

Further, the temperature regulator 92 is not limited to a means which introduces the cooling fluid into the storage tank 94. For example, the temperature regulator may be arranged between the storage tank 94 and the pressure vessel 98, or may be provided in the storage tank 94 or pressure vessel 98 itself.
Moreover, the cooling fluid supplying means 90 is not limited to the configuration of the above embodiment, and just has to be configured such that the cooling fluid flows into the reactor main body 80 at the time of shutdown of the liquid fuel synthesizing system 1. Accordingly, for example, the cooling fluid supplying means may be configured such that the cooling fluid is driven by a transfer pump, etc. at the time of shutdown, and is made to flow into the reactor main body 80.

Further, in the above embodiments, natural gas is used as a hydrocarbon raw material to be supplied to the liquid fuel synthesizing system 1. However, for example, other hydrocarbon raw materials, such as asphalt and residual oil, may be used.
Moreover, although the liquid fuel synthesizing system 1 has been described in the above embodiment, the present invention can be applied to a hydrocarbon synthesis reaction system which synthesizes a hydrocarbon compound by a chemical reaction of a synthesis gas including at least hydrogen and carbon monoxide as main components, and a slurry. In addition, the hydrocarbon synthesis reaction system may be, for example, one including the FT synthesis unit 5 as a main component, and may be one mainly including the bubble column reactor 30 and the cooling fluid supplying means 90.

While preferred embodiments of the invention have been described and illustrated above, it should be understood that these are exemplary of the invention and are not to be considered as limiting.
Accordingly, the invention is not to be considered as being limited by the foregoing description, and is only limited by the scope of the appended claims.

### INDUSTRIAL APPLICABILITY

The present invention relates to a bubble column type hydrocarbon synthesis reactor which synthesizes a hydrocarbon compound by a chemical reaction of a synthesis gas including hydrogen and carbon monoxide as main components, and a slurry having solid catalyst particles suspended in liquid. The hydrocarbon synthesis reactor includes a reactor main body which accommodates the slurry, a synthesis gas supplying section which supplies the synthesis gas to the slurry, and an introducing portion which introduces a cooling fluid having a lower temperature than the slurry into the reactor main body.
According to the bubble column type hydrocarbon synthesis reactor of the present invention, it becomes possible to suppress an increase in the maintenance cost of the bubble column type hydrocarbon synthesis reactor.

## Claims

1. A bubble column type hydrocarbon synthesis reactor (30) which synthesizes a hydrocarbon compound by a chemical reaction of a synthesis gas including hydrogen and carbon monoxide as main components, and a slurry having solid catalyst particles suspended in liquid, the hydrocarbon synthesis reactor (30) comprising:
a reactor main body (80) which accommodates the slurry;
a synthesis gas supplying section (84) which supplies the synthesis gas to the slurry; and
an introducing portion (88, 89) which introduces a cooling fluid having a lower temperature than the slurry temperature inside the reactor main body (80), wherein
the reactor main body (80) is formed in a cylindrical shape, and
the introducing portion (88, 89) includes an introducing opening (88a, 89a) which is opened to an inner peripheral surface of the reactor main body (80), and an introducing flow passage portion (88b, 89b) which leads the cooling fluid to the introducing opening (88a, 89a) such that the cooling fluid flows at least along a peripheral direction of the inner peripheral surface from the introducing opening (88a, 89a).

2. The bubble column type hydrocarbon synthesis reactor according to claim 1, wherein
a plurality of introducing openings (88a, 89a) are provided at intervals in the peripheral direction of the inner peripheral surface, and
wherein the introducing flow passage portion (88b, 89b) is provided so as not to offset the momentum of the flow of the cooling fluid supplied into the reactor main body (80) from the plurality of introducing openings (88a, 89a).

3. The bubble column type hydrocarbon synthesis reactor according to claim 1 or 2, wherein
a plurality of the introducing portions (88, 89) are provided at intervals in an axial direction of the reactor main body (80).

4. The bubble column type hydrocarbon synthesis reactor according to claim 3, wherein
among the plurality of introducing portions (88, 89), the direction of flow of the cooling fluid introduced into the reactor main body (80) from one introducing portion (88) differs from the direction of flow of the cooling fluid introduced into the reactor main body (80) from another introducing portion (89) which is adjacent to the one introducing portion (88).

5. The hydrocarbon synthesis reaction system comprising:
the bubble column type hydrocarbon synthesis reactor (30) according to any one of claims 1 to 4; and
the cooling fluid supplying means (90) which supplies the cooling fluid into the reactor main body (80) through the introducing portion (88, 89).

6. The hydrocarbon synthesis reaction system according to claim 5, wherein
the cooling fluid supplying means (90) includes a pressure vessel (98) capable of holding the cooling fluid with higher pressure than the slurry accommodated in the reactor main body (80), and an opening/closing valve (99) which is provided in a flow passage which leads to the inside of the reactor main body (80) through the introducing portion (88, 89) from the pressure vessel (98), to allow opening and closing of the flow passage.

7. The hydrocarbon synthesis reaction system according to claim 5 or 6, wherein
the cooling fluid supplying means (90) includes a temperature regulator (92) which controls the temperature of the cooling fluid higher than the precipitation temperature of a wax fraction included in the hydrocarbon compound, and lower than that of the slurry accommodated in the reactor main body (80).

8. The hydrocarbon synthesis reaction system according to any one of claims 5 to 7, wherein
the cooling fluid is the hydrocarbon compound extracted from the reactor main body (80).

## Patentansprüche

1. Ein Kohlenwasserstoffsynthesereaktor vom Blasensäulentyp (30), welcher eine Kohlenwasserstoffverbindung durch eine chemische Reaktion eines Synthesegases, das Wasserstoff und Kohlenstoffmonoxid als Hauptkomponenten enthält, und einem Slurry, welches feste Katalysatorteilchen, die in einer Flüssigkeit suspendiert sind, aufweist, synthetisiert, wobei der Kohlenwasserstoffsynthesereaktor (30) umfasst:
einen Hauptreaktorkörper (80), welcher das Slurry fasst;
einen Synthesegas-Zufuhrbereich (84), welcher das Synthesegas zu dem Slurry zuführt; und
einen Einführungsabschnitt (88, 89), welcher eine Kühlflüssigkeit, die eine niedrigere Temperatur als die Slurrytemperatur aufweist, in den Hauptreaktorkörper (80) einführt, wobei
der Hauptreaktorkörper (80) in einer zylindrischen Gestalt geformt ist, und
der Einführungsabschnitt (88, 89) eine Einführungsöffnung (88a, 89a), welche zu einer inneren Umfangsfläche des Hauptreaktorkörpers (80) geöffnet ist, und einen Einführungsströmungskanalabschnitt (88b, 89b), welcher die Kühlflüssigkeit zu der Einführungsöffnung (88a, 89a) leitet, so dass die Kühlflüssigkeit von der Einführungsöffnung (88a, 89a) mindestens entlang einer Umfangsrichtung der inneren Umfangsfläche strömt, enthält.

2. Der Kohlenwasserstoffsynthesereaktor vom Blasensäulentyp gemäß Anspruch 1, wobei mehrere Einführungsöffnungen (88a, 89a) in Intervallen in der peripheren Richtung der inneren Umfangsfläche bereitgestellt sind, und
wobei der Einführungsströmungskanalabschnitt (88b, 89b) so bereitgestellt ist, dass er nicht den Impuls der Strömung der Kühlflüssigkeit, die in den Hauptreaktorkörper (80) durch die mehreren Einführungsöffnungen (88a, 89a) zugeführt wird, kompensiert.

3. Der Kohlenwasserstoffsynthesereaktor vom Blasensäulentyp gemäß Anspruch 1 oder 2, wobei mehrere Einführungsabschnitte (88, 89) in Intervallen in einer axialen Richtung des Hauptreaktorkörpers (80) bereitgestellt sind.

4. Der Kohlenwasserstoffsynthesereaktor vom Blasensäulentyp gemäß Anspruch 3, wobei unter den mehreren Einführungsabschnitten (88, 89) die Richtung der Strömung der Kühlflüssigkeit, die in den Hauptreaktorkörper (80) aus einem Einführungsabschnitt (88) eingeführt wird, sich von der Richtung der Strömung der Kühlflüssigkeit unterscheidet, die in den Hauptreaktorkörper (80) durch einen anderen Einführungsabschnitt (89) eingeführt wird, welcher dem einen Einführungsabschnitt (88) benachbart ist.

5. Das Kohlenwasserstoffsynthesereaktorsystem umfassend:
den Kohlenwasserstoffsynthesereaktor vom Blasensäulentyp (30) gemäß einem der Ansprüche 1 bis 4; und
die Kühlflüssigkeitzufuhrvorrichtung (90), welche die Kühlflüssigkeit in den Hauptreaktorkörper (80) durch den Einführungsabschnitt (88, 89) zuführt.

6. Das Kohlenwasserstoffsynthesereaktorsystem gemäß Anspruch 5, wobei die Kühlflüssigkeitzufuhrvorrichtung (90) ein Druckgefäß (98), welches fähig ist die Kühlflüssigkeit mit einem höheren Druck als das Slurry, das im Hauptreaktorkörper (80) gefasst ist, zu enthalten und ein Öffnungs-/Schließ-Ventil (99) beeinhaltet, welches in einem Strömungskanal bereitgestellt ist, welcher zu dem Inneren des Hauptreaktorkörpers (80) durch den Einführungsabschnitt (88, 89) vom Druckgefäß (98) führt, um Öffnen und Schließen des Strömungskanals zu ermöglichen.

7. Das Kohlenwasserstoffsynthesereaktorsystem gemäß Anspruch 5 oder 6, wobei die Kühlflüssigkeitzufuhrvorrichtung (90) einen Temperaturregler (92) beinhaltet, der die Temperatur der Kühlflüssigkeit so steuert, dass sie höher als die Präzipitationstemperatur einer Wachsfraktion, die in der Kohlenwasserstoffverbindung enthalten ist, und niedriger als die des Slurry, das in dem Hauptreaktorkörper (80) gefasst ist, ist.

8. Das Kohlenwasserstoffsynthesereaktorsystem gemäß einem der Ansprüche 5 bis 7, wobei
die Kühlflüssigkeit die Kohlenwasserstoffverbindung, die aus dem Hauptreaktorkörper (80) extrahiert wurde, ist.

## Revendications

1. Réacteur de synthèse d'hydrocarbure de type colonne à bulles (30) qui synthétise un composé d'hydrocarbure par une réaction chimique d'un gaz de synthèse comprenant de l'hydrogène et du monoxyde de carbone en tant que composants principaux, et une suspension ayant des particules solides de catalyseur en suspension dans du liquide, le réacteur de synthèse d'hydrocarbure (30) comprenant :
un corps principal de réacteur (80) qui loge la suspension ;
une section d'alimentation en gaz de synthèse (84) qui fournit le gaz de synthèse à la suspension ; et
une portion d'introduction (88, 89) qui introduit un fluide de refroidissement ayant une température inférieure à la température de la suspension à l'intérieur du corps principal du réacteur (80), dans lequel :
le corps principal du réacteur (80) est formé selon une forme cylindrique, et
la portion d'introduction (88, 89) inclut une ouverture d'introduction (88a, 89a) qui s'ouvre sur une surface périphérique interne du corps principal du réacteur (80) et une portion de passage du flux d'introduction (88b, 89b) qui conduit le fluide de refroidissement dans l'ouverture d'introduction (88a, 89a) de sorte que le fluide de refroidissement s'écoule au moins le long d'une direction périphérique de la surface périphérique interne à partir de l'ouverture d'introduction (88a, 89a).

2. Réacteur de synthèse d'hydrocarbure de type colonne à bulles selon la revendication 1, dans lequel :
une pluralité d'ouvertures d'introduction (88a, 89a) sont prévues à intervalles dans la direction périphérique de la surface périphérique interne, et
dans lequel la partie de passage du flux d'introduction (88b, 89b) est prévue de manière à ne pas entraver la dynamique de l'écoulement du fluide de refroidissement
amené dans le corps principal du réacteur (80) à partir de la pluralité d'ouvertures d'introduction (88a, 89a).

3. Réacteur de synthèse d'hydrocarbure de type à colonne à bulles selon la revendication 1 ou 2, dans lequel :
une pluralité de portions d'introduction (88, 89) sont prévues à intervalles dans une direction axiale du corps principal du réacteur (80).

4. Réacteur de synthèse d'hydrocarbure de type colonne à bulles selon la revendication 3, dans lequel :
parmi la pluralité de portions d'introduction (88, 89), la direction d'écoulement du fluide de refroidissement introduit dans le corps principal du réacteur (80) par une portion d'introduction (88) est différente de la direction d'écoulement du fluide de refroidissement introduit dans le corps principal du réacteur (80) par une autre portion d'introduction (89) qui est adjacente à la première portion d'introduction (88).

5. Système de réaction de synthèse d'hydrocarbure comprenant :
un réacteur de synthèse d'hydrocarbure de type colonne à bulles (30) selon l'une quelconque des revendications 1 à 4 ; et
des moyens d'alimentation en fluide de refroidissement (90) qui amènent le fluide de refroidissement dans le corps principal du réacteur (80) par la partie d'introduction (88, 89).

6. Système de réaction de synthèse d'hydrocarbure selon la revendication 5, dans lequel :
les moyens d'alimentation en fluide de refroidissement (90) incluent une cuve sous pression (98) capable de maintenir le fluide de refroidissement avec une pression supérieure à la suspension logée dans le corps principal du réacteur (80), et une valve d'ouverture/fermeture (99) qui est prévue dans un passage d'écoulement qui mène à l'intérieur du corps principal du réacteur (80) par la portion d'introduction (88, 89) à partir de la cuve sous pression (98) pour permettre l'ouverture et la fermeture du passage d'écoulement.

7. Système de réaction de synthèse d'hydrocarbure selon la revendication 5 ou 6, dans lequel :
les moyens d'alimentation en fluide de refroidissement (90) incluent un régulateur de température (92) qui contrôle la température du fluide de refroidissement à une valeur plus élevée que la température de précipitation d'une fraction de cire incluse dans le composé d'hydrocarbure, et inférieure à la suspension logée dans le corps principal du réacteur (80).

8. Système de réaction de synthèse d'hydrocarbure selon l'une quelconque des revendications 5 à 7, dans lequel:
le fluide de refroidissement est le composé d'hydrocarbure extrait du corps principal du réacteur (80).
